# EUROPÄISCHE PATENTSCHRIFT

(11) **EP 4 331 957 B1**
(45) Veröffentlichungstag und Bekanntmachung des Hinweises auf die Patenterteilung: **15.10.2025**
(21) Anmeldenummer: 23181435.1
(22) Anmeldetag: 26.06.2023
(51) Int. Cl.: B62D 35/00, B62D 25/16

(54) **ELEKTRISCH ANGETRIEBENES KRAFTFAHRZEUG**
ELECTRICALLY DRIVEN MOTOR VEHICLE
VÉHICULE À MOTEUR À PROPULSION ÉLECTRIQUE

(30) Priorität: 16.08.2022 DE 102022208479
(43) Veröffentlichungstag der Anmeldung: 06.03.2024
(73) Patentinhaber: Stellantis Auto SAS, 78300 Poissy (FR)
(72) Erfinder: BAUSCH, Olaf, 65428 Rüsselsheim am Main (DE); EHRLICH, Dirk, 65428 Rüsselsheim am Main (DE)
(74) Vertreter: BCIP

(56) Entgegenhaltungen:
- DE-A1- 102016 200 936
- DE-A1- 2 147 750
- FR-A1- 3 062 627
- US-A1- 2011 304 129

## Beschreibung

Die Erfindung betrifft ein elektrisch angetriebenes Kraftfahrzeug, insbesondere ein ausschließlich elektrisch angetriebenes Kraftfahrzeug bzw. ein batterieelektrisches Fahrzeug (engl. battery electric vehicle bzw. BEV) oder ein Brennstoffzellenfahrzeug.

Der Betrieb mechanischer Bremsen bei Kraftfahrzeugen führt zu lungengängigen Bremspartikeln, die heutzutage meist ungefiltert in die Umwelt gelangen. Beim Bremsen kommt es weiters zu einem lungengängigen Reifenabrieb, der wie die Bremspartikel in die Umwelt gelangt. Solche Partikelemissionen werden aus Gründen des Gesundheitsschutzes zunehmend kritischer gesehen, so dass Gegenmaßnahmen wünschenswert sind.

Elektrisch betriebene Kraftfahrzeuge verfügen regelmäßig über eine Motorbremse zum Rekuperieren kinetischer Energie sowie für Notbremsungen auch eine mechanische Bremse. Letztere wandelt kinetische Energie in Wärmeenergie um und kann bspw. eine Scheiben- oder Trommelbremse sein.

Die DE 10 2021 107 504 B9 beschreibt ein Brennstoffzellenfahrzeug mit einem auf der Radachse angeordnetem Antriebsaggregat, das eine mechanischen Bremse umfasst. Die Bremse ist von einem Gehäuse luftdicht umschlossen, um Bremspartikel aufzufangen.

DE 10 2016 200 936 A1 beschreibt ein Kraftfahrzeug, das hinter dem Hinterrad eine Luftleitstruktur besitzt, mit der Luft im Nachlauf des Hinterrads zu einem Staubsammler geführt wird. Vorgesehen ist dabei eine Einrichtung, mit der der Abstand der Unterkante der Luftleitstruktur zur Fahrbahnoberfläche in Abhängigkeit von der Fahrzeuggeschwindigkeit eingestellt wird. Eine Aufgabe der vorliegenden Erfindung ist die Bereitstellung eines Kraftfahrzeugs, mit dem weniger im Fahrbetrieb entstehende Bremspartikel und auch Reifenabrieb in die Umwelt gelangen.

Diese und weitere Aufgaben werden durch die unabhängigen Ansprüche 1 und 7 gelöst. Vorteilhafte Weiterbildungen werden durch die Unteransprüche angegeben.

Gemäß der Erfindung wird ein elektrisch angetriebenes oder antreibbares Kraftfahrzeug vorgeschlagen. Das Kraftfahrzeug kann ein batterieelektrisches Kraftfahrzeug sein, das ausschließlich elektrisch antreibbar ist bzw. angetrieben wird, jedoch nicht mit einem elektrischen Radnabenmotor. Es kann auch ein Hybridfahrzeug, das sowohl einen elektrischen als auch einen verbrennungsmotorischen Antrieb besitzt, vorgesehen sein, sofern die thermische Belastung der Bremse bei diesem erfindungsgemäßen Kraftfahrzeug akzeptabel ist.

Weiterhin hat das Kraftfahrzeug eine (Karosserie-) Seitenwand, die im Bereich des hinteren Radkastens geschlossen ausgeführt ist. Durch diese geschlossene Ausführung ist das Hinterrad seitlich von außen so gut wie nicht mehr zu sehen bzw. ist verdeckt. Höchstens ist das Hinterrad noch in seinem untersten Bereich zu sehen, wo das Rad auf dem Straßenbelag aufliegt. Bezogen auf die lichte Höhe des Hinterrads in Vertikalrichtung sind höchstens noch 20-30% des Hinterrads bei einem Blick in Fahrzeugquerrichtung und entlang der Hinterachse zu sehen. Die geschlossene Ausführung kann mit einem Verkleidungsteil erreicht werden, das an der restlichen Seitenwand abnehmbar befestigt ist, um sich bei einem erforderlichen Radwechsel Zugang zum Hinterrad verschaffen zu können.

Im Bereich des Hinterrads ist die Seitenwand mit einem in Fahrzeuglängsrichtung gesehen vorderen Lufteinlass und mit einem entgegengesetzt zur Fahrzeuglängsrichtung gesehen hinteren Luftauslass ausgestattet. Luftein- und/oder Luftauslass können im oben genannten Verkleidungsteil vorgesehen sein, mit dem die durch die Seitenwand definierte Hüllfläche im Bereich des hinteren Radkastens geschlossen wird. Im Fahrbetrieb kommt es zwischen Lufteinlass und Luftauslass zu einem Luftpfad innerhalb des hinteren Radkastens, der einerseits Bremspartikel und andererseits Reifenabrieb ansaugt und mitreißt und darüber aus dem Radkasten entfernt.

Ferner hat die Seitenwand oder das Verkleidungsteil einen im Luftauslass angeordneten Filter zum Reinigen der austretenden Luft, so dass die Bremspartikel sowie der Reifenabrieb im Filtermaterial des Luftauslasses aufgefangen werden können.

Die vorstehend genannte Lösung hat mehrere Vorteile:
- Es gelangen weniger gesundheitsbedenkliche Bremspartikel sowie Partikel vom Reifenabrieb in die Umwelt.
- der Änderungsbedarf am Fahrzeug zur Implementierung dieser Lösung ist gering und erfordert insbesondere keine Änderungen an Bremse oder Felgen.
- Da durch Schließen des hinteren Radkastens weniger Luft in die Felge strömt kommt weniger Feuchtigkeit und Schmutz zur Bremsscheibe und Bremssattel, was weniger Korrosion und Bremsgeräusche zur Folge hat.
- Durch die geschlossene Ausführung der Seitenwand im Bereich des hinteren Radkastens kommt es zu weniger Verwirbelungen, was sich positiv auf die Reichweite des elektrisch antreibbaren Fahrzeugs auswirkt.

Gemäß Anspruch 1 der Erfindung ist das Kraftfahrzeug ein reines Elektrofahrzeug, d.h. wird ausschließlich elektrisch angetrieben bzw. ist ausschließlich elektrisch antreibbar. In einem solchen Fall wird der Radkasten nicht wie bei einem Verbrennungsmotor benötigt, um Luft zur Bremse zu leiten und darüber zu kühlen, da solche Fahrzeuge beim Bremsen ohne Wärmeerzeugung rekuperieren.

In einer Ausführungsform hat das Hinterrad eine Felge, bspw. aus Stahl oder einem Leichtmetall wie Aluminium, und die mechanische Bremse ragt zumindest teilweise in die innenseitige Vertiefung der Felge hinein. Die Bremse ist also dicht zu der durch die Seitenwand der Karosserie definierten Hüllfläche angeordnet und befindet sich im Radkasten bzw. unterhalb des Kotflügels. Die mechanische Bremse kann konventionell als Scheiben- oder Trommelbremse ausgeführt sein.

In einer weiteren Ausführungsform sind der Lufteinlass und/oder der Luftauslass länglich ausgeführt sind, wobei dessen Längsachse unter einem Winkel von +/- 20° zur Vertikalen angeordnet ist. Auf diese Weise kann der entlang der Seitenwand strömende Luft gut in den Radkasten eingekoppelt werden.

Ferner ist eine Ausführungsform gewählt, bei der der Filter zum Filtern von Bremsstaub und Bremspartikeln ausgelegt ist, insbesondere um lungengängige Partikel unter 2-3 µm herauszufiltern, die in die Bronchien gelangen können, besonders aber Partikel mit einer Größe unter 1 µm, die in die Lungenbläschen gelangen können. Hierdurch werden gesundheitsbedenkliche Partikel in der Luft vermieden.

Ferner ist es denkbar, dass der Filter ein Vliesmaterial umfasst, um Partikel herauszufiltern.

Diese Wahl, bspw. ausgeführt als eine Kartusche mit dem besagten, die Partikel aufnehmenden Vliesmaterial, das in einem Halter angeordnet ist, ist besonders kostengünstig und der Wechsel des Vliesmaterials bzw. der Kartusche, einfach. Alternativ kann auch ein Keramikfilter zum Einsatz kommen. Bei hinreichend großem Filtervolumen sind zudem lange Serviceintervalle realisierbar, so dass ein Austausch des Filters im Rahmen einer jährlichen Inspektion möglich ist.

Nachfolgend soll die Erfindung anhand eines Ausführungsbeispiels näher beschrieben werden. Es zeigt:

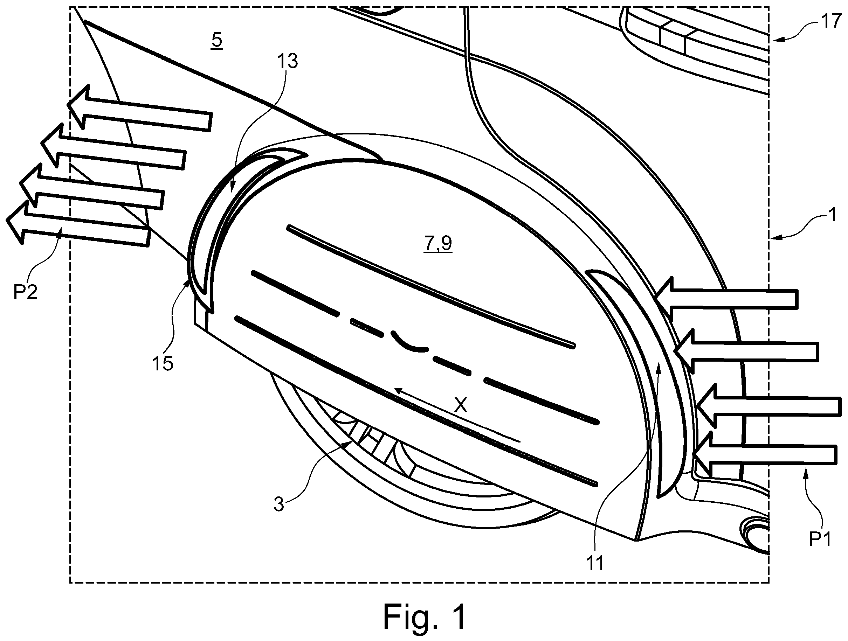

Fig. 1 ein Kraftfahrzeug gemäß der Erfindung in einem ersten Ausführungsbeispiel

Fig. 1 zeigt ein batterieelektrisches Kraftfahrzeug 1 mit einem rechten Hinterrad 3 sowie einer Seitenwand 5 aus einem Blechmaterial. Die Seitenwand 5 hat im Bereich 7 des Hinterrads 3 keine Aussparung, sondern ist geschlossen ausgeführt. Die geschlossene Ausführung wird mit einem Verkleidungsteil 9 erzielt, das mit geeigneten Befestigungsmitteln wie bspw. Clips abnehmbar am Seitenteil 5 befestigt ist und daran bündig anliegt. Mit dem Verkleidungsteil 9 ist das Hinterrad 3 verdeckt bis auf einen unteren Bereich, der etwa 25% der lichten Höhe des Hinterrads 3 ausmacht, und damit nicht zu sehen.

In Fig. 1 zeigt der Pfeil X in die Fahrzeuglängsrichtung nach vorne. Bei Vorausfahrt strömt Luft in Richtung der Pfeile P1 in den Lufteinlass 11 hinein, strömt an der Innenseite des Verkleidungsteils 9 entlang und aus dem grob unterhalb des Türgriffs 17 angeordneten Luftauslass 13 wieder heraus, wie es die Pfeile P2 andeuten. Damit wird durch die an der Verkleidungsteilinnenseite vorbeiströmende Luft ein Unterdruck erzeugt, der Bremspartikel und Partikel des Radabriebs ansaugt und mitreißt. Der Partikelstrom gelang zum Luftauslass 13, in dem ein Filter 15 mit einem Vliesmaterial eingeclipst ist. Die Partikel werden vom Filtervlies aufgefangen und gelangen so nicht mehr in die Umwelt.

Das Fahrzeug 1 ist ein batterielektrisches Fahrzeug, das beim Bremsvorgang regelmäßig rekuperiert bzw. die kinetische Energie nicht mehr in Wärme umwandelt. Deshalb ist eine Belüftung der Radbremse über einen offenen Radkasten nicht erforderlich und kann der Radkasten geschlossen werden, zumal die Hinterräder auch nicht einlenken. Denkbar ist der Einsatz jedoch auch bei einem Hybridfahrzeug wie einem Plug-in-Hybrid, sofern dieses auch mit Rekuperation bremsen kann.

### Bezugszeichenliste

- 1: Kraftfahrzeug
- 3: Hinterrad
- 5: Seitenwand
- 7: Bereich
- 9: Verkleidungsteil
- 11: Lufteinlass
- 13: Luftauslass
- 15: Filter

- P1: Pfeil für einströmende Luft
- P2: Pfeil für ausströmende Luft
- X: Fahrzeuglängsrichtung

## Patentansprüche

1. Elektrisch angetriebenes Kraftfahrzeug (1) mit einem Hinterrad (3) sowie mit einer Seitenwand (5), die im Bereich (7) des Hinterrads (3) geschlossen ausgeführt ist, **dadurch gekennzeichnet , dass** der Bereich (7) mit einem bezogen auf die Fahrzeuglängsrichtung (X) vorne angeordneten Lufteinlass (11) und mit einen bezogen auf die Fahrzeuglängsrichtung hinten angeordneten Luftauslass (13) ausgestattet ist, und mit einem im Luftauslass (11) angeordneten Filter (15) zum Reinigen austretender Luft.

2. Kraftfahrzeug nach Anspruch 1, ausgebildet als ausschließlich elektrisch angetriebenes oder antreibbares Kraftfahrzeug.

3. Kraftfahrzeug nach Anspruch 1 oder 2, **dadurch gekennzeichnet, dass** der Lufteinlass (11) und/oder der Luftauslass (13) länglich ausgeführt sind, wobei dessen Längsachse unter einem Winkel von +/- 20° zur Vertikalen angeordnet ist.

4. Kraftfahrzeug nach einem oder mehreren der vorherigen Ansprüche, bei dem der Filter (15) zum Filtern von Bremsstaub und Bremspartikeln ausgelegt ist.

5. Kraftfahrzeug nach einem oder mehreren der vorherigen Ansprüche, bei dem der Filter (15) ein Vliesmaterial umfasst oder ein Keramikfilter ist.

6. Kraftfahrzeug nach einem oder mehreren der vorherigen Ansprüche, bei dem der Filter (15) auswechselbar im Luftauslass (11) angeordnet ist.

7. Seitenwand für ein Kraftfahrzeug (1) mit einem Radkastenbereich für ein Hinterrad (3), der geschlossen ausgeführt ist, **dadurch gekennzeichnet, dass** der Radkastenbereich mit einem bezogen auf die Fahrzeuglängsrichtung (X) vorne angeordneten Lufteinlass (11) und mit einen bezogen auf die Fahrzeuglängsrichtung hinten angeordneten Luftauslass (13) ausgestattet ist, mit einem im Luftauslass (11) angeordneten Filter (15) zum Reinigen austretender Luft sowie mit im Luftauslass (11) vorgesehenen Befestigungsmitteln zum Anordnen des Filters (15) zum Reinigen der austretenden Luft.

## Claims

1. An electrically powered motor vehicle (1) with a rear wheel (3) and a side wall (5) that is closed in the area (7) of the rear wheel (3), **characterized in that** the area (7) is equipped with an air inlet (11) arranged at the front relative to the vehicle's longitudinal direction (X) and an air outlet (13) arranged at the rear relative to the vehicle's longitudinal direction, and with a filter (15) arranged in the air outlet (11) for cleaning escaping air.

2. A motor vehicle according to claim 1, designed as an exclusively electrically powered or drivable motor vehicle.

3. A motor vehicle according to claim 1 or 2, **characterized in that** the air inlet (11) and/or the air outlet (13) are elongated, with their longitudinal axis being arranged at an angle of +/- 20° to the vertical.

4. Motor vehicle according to one or more of the preceding claims, in which the filter (15) is designed to filter brake dust and brake particles.

5. Motor vehicle according to one or more of the preceding claims, in which the filter (15) comprises a nonwoven material or is a ceramic filter.

6. Motor vehicle according to one or more of the preceding claims, in which the filter (15) is replaceably arranged in the air outlet (11).

7. Side wall for a motor vehicle (1) with a wheel housing area for a rear wheel (3), which is designed to be closed, **characterized in that** the wheel housing area is equipped with an air inlet (11) arranged at the front with respect to the vehicle longitudinal direction (X) and with an air outlet (13) arranged at the rear with respect to the vehicle longitudinal direction, with a filter (15) arranged in the air outlet (11) for cleaning escaping air and with fastening means provided in the air outlet (11) for arranging the filter (15) for cleaning the escaping air.

## Revendications

1. Véhicule automobile électrique (1) doté d'une roue arrière (3) et d'une paroi latérale (5) fermée au niveau de la zone (7) de la roue arrière (3), **caractérisé en ce que** la zone (7) est équipée d'une entrée d'air (11) disposée à l'avant par rapport à la direction longitudinale (X) du véhicule et d'une sortie d'air (13) disposée à l'arrière par rapport à la direction longitudinale du véhicule, ainsi que d'un filtre (15) disposé dans la sortie d'air (11) pour purifier l'air s'échappant.

2. Véhicule automobile selon la revendication 1, conçu comme un véhicule automobile exclusivement électrique ou à moteur.

3. Véhicule automobile selon la revendication 1 ou 2, **caractérisé en ce que** l'entrée d'air (11) et/ou la sortie d'air (13) sont allongées, leur axe longitudinal formant un angle de +/- 20° par rapport à la verticale.

4. Véhicule automobile selon une ou plusieurs des revendications précédentes, dans lequel le filtre (15) est conçu pour filtrer la poussière et les particules de frein.

5. Véhicule automobile selon une ou plusieurs des revendications précédentes, dans lequel le filtre (15) est constitué d'un matériau non tissé ou d'un filtre en céramique.

6. Véhicule automobile selon une ou plusieurs des revendications précédentes, dans lequel le filtre (15) est monté de manière interchangeable dans la sortie d'air (11).

7. Paroi latérale pour un véhicule automobile (1) avec une zone de passage de roue pour une roue arrière (3), qui est conçue pour être fermée, **caractérisée en ce que** la zone de passage de roue est équipée d'une entrée d'air (11) disposée à l'avant par rapport à la direction longitudinale du véhicule (X) et d'une sortie d'air (13) disposée à l'arrière par rapport à la direction longitudinale du véhicule, d'un filtre (15) disposé dans la sortie d'air (11) pour nettoyer l'air d'échappement et de moyens de fixation prévus dans la sortie d'air (11) pour disposer le filtre (15) pour nettoyer l'air d'échappement.
